# EUROPÄISCHE PATENTSCHRIFT

(11) **EP 3 416 878 B1**
(45) Veröffentlichungstag und Bekanntmachung des Hinweises auf die Patenterteilung: **01.04.2020**
(21) Anmeldenummer: 17709579.1
(22) Anmeldetag: 17.02.2017
(51) Int. Cl.: B62K 21/00, B62K 3/00

(54) **ZWEIRAD**
TWO-WHEELER
VÉHICULE À DEUX ROUES

(30) Priorität: 18.02.2016 DE 102016001843
(43) Veröffentlichungstag der Anmeldung: 26.12.2018
(73) Patentinhaber: Technische Hochschule Köln, 50968 Köln (DE)
(72) Erfinder: FRANTZEN, Michael, 52076 Aachen (DE); MANSEL, Janke, 52538 Gangelt (DE); OPITZ, Jens, 51789 Lindlar (DE); VREDEN, Felix, 51105 Köln (DE)
(74) Vertreter: Cohausz Hannig Borkowski Wißgott
(86) Internationale Anmeldenummer: PCT/EP2017/000232
(87) Internationale Veröffentlichungsnummer: WO 2017/140433

(56) Entgegenhaltungen:
- DE-A1- 19 724 360
- DE-A1-102006 019 290
- US-A- 602 034
- US-B1- 7 249 774

## Beschreibung

Die Erfindung betrifft ein Zweirad, mit einem Rahmen umfassend ein vorderes Steuerrohr, das eine vordere Lenkachse definiert und an dem ein vorderes Gabelschaftrohr mit einer ein Vorderrad aufnehmenden Vorderradgabel und einer Lenkstange, an der ein Lenker angeordnet ist, drehbar gelagert ist, und ein hinteres Steuerrohr, das eine hintere Lenkachse definiert und an dem ein hinteres Gabelschaftrohr mit einer ein Hinterrad aufnehmenden Hinterradgabel drehbar gelagert ist, wobei das hintere Gabelschaftrohr mit dem vorderen Gabelschaftrohr über eine Kopplungsanordnung verbunden und in Abhängigkeit des Drehwinkels des vorderen Gabelschaftrohres drehbar ist.

Zweiräder mit hintereinander angeordneten Rädern, wie beispielsweise Roller oder Fahrräder, weisen üblicherweise eine Lenkstange mit einem Lenker auf, der ausschließlich auf das Vorderrad wirkt und mit den Händen eines Fahrers gelenkt ist. Aufgrund dessen, dass diese Zweiräder nur eine Lenkstange aufweisen ist das Wenden eines solchen Zweirades, bei üblichem Gebrauch, dadurch gekennzeichnet, dass der Wendekreis mindestens dem doppelten Radstand des Zweirades entspricht. Beim Umfahren eines Hindernisses folgt das Hinterrad eines solchen Zweirades nicht der Spur des Vorderrades, so dass die Wendigkeit eines typischen Zweirades deutlich eingeschränkt ist.

Aus dem gattungsgemäßen deutschen Patentdokument DE 197 24 360 A1 ist bekannt, dass die Wendigkeit eines Zweirades, das zwei hintereinander angeordnete Räder aufweist, durch ein lenkbares Hinterrad deutlich zu verbessern ist. Dieses Patentdokument beschreibt einen zweirädrigen Roller, dessen Rahmen zwei Steuerrohre mit je einer schwenkbaren Gabel für das Vorder- bzw. Hinterrad aufweist, wobei eine durch einen Lenker betätigte Vorderradgabel den Lenkeinschlag des Vorderrades über eine Verbindungsanordnung in einen Lenkeinschlag des Hinterrades überführt.

An den Gabeln ist jeweils eine Trennscheibe befestigt, wobei die Trennscheiben über ein Stahlseil so miteinander verbunden sind, dass bei einer Lenkbewegung der Vorderachse eine gegensinnige Lenkbewegung erfolgt. Dadurch dass die hintere Gabel über eine Kopplungsanordnung, die durch einen Seilzug gebildet ist, in Abhängigkeit des Drehwinkels des vorderen Gabelschaftrohres drehbar ist, wird ein Roller geschaffen, der ein wendiges und kontrolliertes Fahrverhalten aufweist, wobei eine möglichst exakte Spurführung sichergestellt ist. Die Steuerrohre, in denen die Gabeln drehbar gelagert sind, sind in einem spitzen Winkel zu einer Vertikalen geneigt, so dass der Roller trotz wendigem Fahrverhalten noch einen sicheren Geradeauslauf aufweist. Da hier die Lenkstange, welche am oberen Ende den Lenker aufweist, dieselbe Neigung wie die vordere Lenkachse aufweist, hier sogar die Lenkstange die vordere Lenkachse koaxial umgibt, kann die Neigung der vorderen Lenkachse zur Hochachse nicht weiter vergrößert werden, da ansonsten die Lenkstange die Stellfläche des Standbrettes überdeckt und kein Platz mehr für den Benutzer verbleibt. Daher liegt der Schnittpunkt der Lenkachsen sehr weit über dem Kopf eines Fahrers.

Das Patent US 3,620,547 zeigt ebenfalls ein Zweirad, dessen Rahmen zwei Steuerrohre aufweist, in denen jeweils eine Gabel drehbar gelagert ist, wobei die vordere Gabel nicht mit der hinteren Gabel gekoppelt ist. Das Schwenken der hinteren Gabel wird, statt durch die Lenkbewegung der vorderen Gabel, durch eine Schrägstellung eines Standbettes erzielt, die durch eine Gewichtsverlagerung des Fahrers verursacht ist. Die unabhängige Auslenkung der beiden Gabeln führt zu einer flexiblen Steuerung des Zweirades, allerdings wird der Geradeauslauf des Zweirades dadurch erschwert, dass jegliche Gewichtsverlagerung des Fahrers in eine Lenkbewegung des Hinterrades umgesetzt wird.

Der Erfindung liegt die Aufgabe zu Grunde, ein Zweirad zur Verfügung zu stellen, das bei einem kompakten, robusten und wartungsfreundlichem Aufbau ein hohe Wendigkeit aufweist, über eine exakte Spurführung verfügt und in Kurven ein rasantes Vorankommen ermöglicht.

Die Aufgabe wird gemäß Anspruch 1 dadurch gelöst, dass die vordere Lenkachse und die hintere Lenkachse aufeinander zugeneigt sind und sich unterhalb des Lenkers schneiden. Bevorzugt befindet sich der Schnittpunkt der vorderen Lenkachse mit der hinteren Lenkachse unterhalb der Schritthöhe eines Durchschnittsmenschen.

Bezogen auf die Geradeausfahrtrichtung des Zweirades ist die vordere Lenkachse nach hinten geneigt und die hintere Lenkachse nach vorne geneigt. Die Neigung wird dabei oberhalb der Fahrbahn betrachtet, auf welcher das Zweirad aufsteht. Die Längsachse des Zweirades ist parallel zur Geradeausfahrtrichtung des Zweirades definiert wobei sich die Richtungsangaben vorne und hinten auf die Gradeausfahrtrichtung beziehen. Die Querachse ist senkrecht zur Längsachse orientiert und die Richtungsangaben links und rechts sind ebenfalls auf die Gradeausfahrtrichtung des Zweirades bezogen. Bei Betrieb des Zweirades sind die Räder desselbigen typischerweise mit einer Fahrbahn in Kontakt. Die Punkte der Räder, an denen beim Betrieb typischerweise ein Kontakt vorliegt, werden in folgenden als Fahrbahnkontaktpunkt des Vorderrades bzw. des Hinterrades bezeichnet. Die Fahrbahnkontaktpunkte definieren die Richtungsangabe bezüglich einer Hochachse, wobei sich die Fahrbahnkontaktpunkte des Zweirades unten befinden. Höhenangaben beziehen sich in der Folge auf die Fahrbahnkontaktpunkte der Räder.

Dadurch, dass die vordere Lenkachse nach hinten geneigt ist und nicht vertikal orientiert ist, führt eine Drehung des vorderen Gabelschafrohres zu einer Verkippung des Vorderrades gegenüber der Längsachse des Rahmens und gegenüber einer Vertikalen. Ein Lenkeinschlag des Lenkers führt somit zu einem Radsturz, also einem Winkel zwischen Radmittelebene und einer Senkrechten der Fahrbahn.

Das vordere Gabelschaftrohr ist mit dem hinteren Gabelschaftrohr über eine Kopplungsanordnung verbunden, so dass eine Drehung des vorderen Gabelschaftrohres zu einer Drehung des hinteren Gabelschaftrohres führt. Aufgrund dessen, dass das hintere Gabelschaftrohr nach vorne geneigt ist und nicht vertikal orientiert ist, führt eine Drehbewegung dazu, dass das Hinterrad bezüglich der Längsachse des Rahmens und einer Vertikalen verkippt wird. Die Lenkachsen schneiden sich erfindungsgemäß unterhalb des Lenkers, so dass die Neigung der vorderen Lenkachse und der hinteren Lenkachse im Vergleich zu herkömmlichen Zweirädern sehr stark ausgeprägt ist. Dadurch führt eine Drehbewegung des vorderen Gabelschaftrohres, die durch eine Lenkbewegung des Lenkers verursacht wird, zu einer starken Verkippung des Vorderrades und des Hinterrades bezüglich der Längsachse des Rahmens und einer Vertikalen. Ein Lenkeinschlag führt somit zu einem Radsturz des Vorderrades und des Hinterrades.

Die ausgeprägte zueinander gerichtete Neigung der vorderen und der hinteren Lenkachse hat erfindungsgemäß den Vorteil, dass sich bei einem Lenkeinschlag eine starke Verkippung des Vorderrades und des Hinterrades bezüglich einer Vertikalen bzw. ein Radsturz einstellt. Diese führt bei einer Kurvenfahrt zu einer zusätzlichen Seitenkraftgenerierung, so dass sich Kurven mit einem kleinen Kurvenradius mit einer höheren Geschwindigkeit durchfahren lassen. Der Vorteil des erfindungsgemäßen Zweirades liegt also darin, dass durch die starke Neigung der Lenkachsen eine wendige Kurvenfahrt mit hoher Geschwindigkeit möglich ist. Des Weiteren wird durch die gleichzeitige Lenkung des Vorder- und des Hinterrades der Kurvenradius bei einem Lenkeinschlag deutlich verkleinert. Die Kombination aus verkleinertem Wendekreis und einer Verkippung der Räder bezüglich einer Vertikalen führt dazu, dass die Agilität des Zweirades bezüglich herkömmlicher Zweiräder signifikant verbessert ist. In einer bevorzugten Ausführung ist der Wendekreis des erfindungsgemäßen Zweirades im Durchmesser kleiner als 1 Meter.

In einer bevorzugten Ausführung der Erfindung weist der Schnittpunkt der vorderen Lenkachse mit der hinteren Lenkachse eine Höhe auf, die dem 0,7 bis 1,3-fachen des Radstandes zwischen Vorderrad und Hinterrad entspricht. Besonders bevorzugt ist eine Höhe des Schnittpunktes der Lenkachsen die gleich dem Radstand von Vorder- und Hinterrad ist. Eine derartige Ausrichtung der Lenkachsen führt dazu, dass ein Lenkeinschlag einen Radsturz erzeugt, der bezüglich des Radstandes einen optimalen Winkel einnimmt. Dadurch wird vorteilhafterweise die Wendigkeit bei Kurvenfahrt verbessert.

Eine vorteilhafte Ausführung der Erfindung zeichnet sich dadurch aus, dass die vordere Lenkachse und die hintere Lenkachse mit identischem Neigungswinkelbetrag, insbesondere mit entgegengesetzter Neigungsrichtung, zur Vertikalen geneigt sind. Die Neigung der Lenkachsen zur Vertikalen weist dabei bevorzugt einen Winkelbetrag im Bereich von 15 bis 35 Grad auf, wobei ein Neigungswinkel zwischen 20 bis 30 Grad weiter bevorzugt und ein Winkel von 25 bis 28 Grad besonders bevorzugt ist. Der zwischen den Lenkachsen eingeschlossene Winkel liegt bevorzugt im Bereich von 30 bis 70 Grad, weiter bevorzugt 40 bis 60 Grad, noch weiter bevorzugt 50 bis 56 Grad.

Der identische Neigungswinkelbetrag der vorderen Lenkachse und der hinteren Lenkachse führt dazu, dass bei einer gleichen Drehbewegung des vorderen Gabelschaftrohres und des hinteren Gabelschaftrohres eine identische Verkippung des Vorderrades und des Hinterrades bezüglich einer Vertikalen realisiert wird.

Diese Ausführung der Erfindung hat den Vorteil, dass sowohl Vorder- als auch Hinterrad bezüglich einer Vertikalen und der Längsachse des Rahmens die gleiche Verkippung aufweisen, so dass beide Räder bei Kurvenfahrt den gleichen Einfluss auf die Seitenkraftgenerierung haben und somit eine wendige Fahrweise ermöglichen.

Eine weitere Ausführung der Erfindung sieht es vor, dass die Lenkstange abgewinkelt in Richtung des Vorderrades am Gabelschaftrohr angeordnet ist.

Auf diese Weise ist der am oberen Ende der Lenkstange befestigte Lenker bezogen auf den Rahmen nach vorne versetzt, so dass oberhalb des Rahmens und der Kupplungsanordnung Platz geschaffen ist, der vorteilhafterweise durch den Fahrer des Zweirades einnehmbar ist.

Die Griffe des Lenkers liegen vom Fahrer aus in der Fahrtrichtung gesehen vor der hinteren Lenkachse, insbesondere damit im eingeschlossenen nach oben offenen Winkelbereich zwischen den beiden Lenkachsen oberhalb von deren Schnittpunkt.

Bevorzugt ist die radiale Entfernung des oberen Endes der Lenkstange zur hinteren Lenkachse kleiner als zur vorderen Lenkachse. Insbesondere wird als die radiale Entfernung allgemein diejenige Entfernung verstanden, die sich zwischen dem oberen Ende der Lenkstange und der betrachteten Lenkachse auf einer gedachten Linie ergibt, welche senkrecht zur betrachteten Lenkachse liegt und welche bevorzugt das oberen Ende der Lenkstange schneidet.

Eine besonders bevorzugte Ausführungsvariante der Erfindung sieht es vor, dass die radiale Entfernung des oberen Endes der Lenkstange zur vorderen Lenkachse größer als das Ellenbogenmaß eines Durchschnittsmenschen ist. Bevorzugt ist dabei eine radiale Entfernung zur vorderen Lenkachse, die größer als 30 cm, weiter bevorzugt größer als 50 cm ist.

Dadurch, dass die radiale Entfernung des oberen Endes der Lenkstange zur vorderen Lenkachse größer als das Ellenbogenmaß ist, wird oberhalb des Rahmens genügend Raum für den Fahrer geschaffen. Zudem führt eine radiale Entfernung, die größer ist als das Ellenbogenmaß eines Durchschnittsmenschen dazu, dass der Fahrer den Lenker auf einfache Weise bedienen und einen Lenkeinschlag vollführen kann. Der Lenker wird hierdurch auch beim Lenken signifikant um den Körper des Fahrers herumgeführt.

Vorteilhafterweise wird durch diese Ausführung der Erfindung eine ergonomische Lenkung des erfindungsgemäßen Zweirades ermöglicht.

In einer bevorzugten Ausführungsvariante der Erfindung ist vorgesehen, dass sich das obere Ende der Lenkstange in der Nähe der hinteren Lenkachse befindet. Besonders bevorzugt ist, dass die radiale Entfernung des oberen Endes der Lenkstange zur hinteren Lenkachse kleiner als 20 cm, weiter bevorzugt kleiner als 10 cm ist.

Auf diese Weise wird sichergestellt, dass der Lenker bei einer Lenkbewegung gegenüber der Lenkachse des Rahmens und einer Vertikalen verkippt wird und den Raum oberhalb des Rahmens frei lässt, so dass dieser durch den Fahrer einnehmbar ist. Zudem dreht sich der Lenker bei einer Lenkbewegung um den Fahrer, so dass eine ergonomische Lenkung realisierbar ist. Außerdem wird die Lenkstange bei einer Lenkbewegung gegenüber einer Vertikalen und der Längsachse des Rahmens in Richtung des Lenkeinschlags gekippt und entsprechend der Neigung des Vorderrades mitgeführt.

Vorteilhafterweise wird durch eine derartige Ausführung der Erfindung für den Fahrer eine ergonomische Fahrposition zur Verfügung gestellt. Insbesondere wird der Fahrer bei einer Lenkbewegung, die eine Verkippung der Lenkstange gegenüber der Längsachse des Rahmens und einer Vertikalen verursacht, durch den Lenker in eine Schräglage geführt. Der Fahrer wird somit bei Kurvenfahrt in die Schräglage des Zweirades hineingeführt, was vorteilhafterweise zur Folge hat, dass das Zweirad bei Kurvenfahrt mit vergleichsweise hoher Geschwindigkeiten für den Fahrer leicht zu lenken ist.

Eine weitere Ausführungsvariante der Erfindung sieht vor, dass die Höhe des oberen Endes der Lenkstange um das 1,6 bis 2,0-fache größer ist als der Radstand zwischen Hinter- und Vorderrad. Besonders bevorzugt ist eine 1,8-fache Höhe. Eine derartige Wahl der Höhe des oberen Endes der Lenkstange führt dazu, dass die Höhe Zweirades größer als die Länge des Zweirades ist. Das obere Ende der Lenkstange ist bevorzugt die Stelle, an welcher der Lenkerbügel oder dessen Vorbau an der Lenkstange befestigt ist. Dies erlaubt vorteilhafterweise einen in Längsrichtung kompakten Aufbau. Insbesondere führt das Verhältnis zwischen Höhe und Radstand auch zu einer hohen Wendigkeit des Zweirades.Eine weitere Ausführungsvariante ist dadurch gekennzeichnet, dass eine nach unten verlängerte Mittelachse der Lenkstange eine Verbindungsgrade zwischen einem Fahrbahnkontaktpunkt des Vorderrades und einem Fahrbahnkontaktpunkt des Hinterrades, bzw. die Fahrbahnebene, in einem Punkt schneidet, der in Längsrichtung maximal einen Abstand von 15 cm, bevorzugt maximal 10 cm, weiter bevorzugt maximal 5 cm, zur der bevorzugt vertikalen Höhenachse des Gesamtschwerpunktes des Zweirades aufweist oder noch weiter bevorzugt exakt diese in der genannten Verbindungsgeraden / Fahrbahnebene schneidet.

Die Lenkstange ist bevorzugt eine zumindest bereichsweise, bevorzugt insgesamt linear erstreckte Stange, wobei dieser linear erstreckte Bereich mit der Lenkachse bzw. dem Steuerrohr einen in Fahrtrichtung offenen Winkel von 125 Grad bis 155 Grad einschließt. Bevorzugt weist die Lenkstange zwischen der Befestigungsstelle des Lenkerbügels oder dessen Vorbaus und dem Schnittpunkt mit der Lenkachse eine Länge von 50 bis 70 cm auf._Weiter bevorzugt ist die Lenkstange in einem Abstandsbereich von 4 cm bis 8 cm gemessen vom oberen Steuerrohrende aus der Richtung der Lenkachse um den vorgenannten Winkelbetrag abgewinkelt.

Eine besonders fahrstabile Ausführungsvariante der Erfindung ist dadurch gekennzeichnet, dass das Verhältnis der Nachlaufstrecke des Vorderrades zur Nachlaufstrecke des Hinterrades gleich dem Verhältnis der Hinterradlast zur Vorderradlast ist. Eine derartige Ausgestaltung der Nachlaufstrecken des Vorder- und Hinterrades führt dazu, dass Störmomente ausgeglichen werden. Vorteilhafterweise führt dies zu einem stabileren Fahrverhalten, insbesondere bei Gradeausfahrt.

Eine besonders wendige Ausführungsform der Erfindung sieht es vor, dass durch die Kopplungsanordnung eine Drehbewegung des vorderen Gabelschaftrohres in eine gegensinnige Drehbewegung des hinteren Gabelschaftrohres überführt ist. Besonders bevorzugt ist dabei, dass die Drehwinkel beider Gabelschaftrohre denselben Winkelbetrag aufweisen.

Durch die gegensinnige Kopplung der Drehbewegung des vorderen Gabelschaftrohres zu dem hinteren Gabelschaftrohr wird bei einer Lenkbewegung ein Kurvenradius realisiert, der kleiner ist als bei einem Zweirad, bei dem nur ein Gabelschaftrohr gelenkt ist. Ist der Winkelbetrag der Drehung beim vorderen Gabelschaftrohr genauso groß wie beim hinteren Gabelschaftrohr, so wird der bezüglich einer Lenkbewegung minimale Kurvenradius realisiert.

Der Vorteil einer gegensinnigen Kopplung liegt somit darin, dass ein Lenkeinschlag zu einem minimalen Kurvenradius führt und somit die Wendigkeit des erfindungsgemäßen Zweirades bezüglich herkömmlicher Zweiräder deutlich erhöht ist. Die Wendigkeit des erfindungsgemäßen Zweirades wird insbesondere dadurch erhöht, dass die gegensinnige Drehbewegung von Hinter- und Vorderrad mit einer gleich gerichteten Verkippung von Hinter- und Vorderrad bezüglich einer Vertikalen kombiniert ist. Dadurch lassen sich mit dem Zweirad sehr kleine Kurvenradien mit einer starken Schräglage und damit erhöhter Geschwindigkeit durchfahren.

Eine weitere Ausführungsform der Erfindung sieht es vor, dass das Übersetzungsverhältnis zwischen den Drehwinkeln der Gabelschaftrohre einstellbar ist. Es ist insbesondere vorgesehen, dass dieses Übersetzungsverhältnis an der Kopplungsanordnung einstellbar ist, wobei das Verhältnis von Vorderraddrehwinkel zum Hinterraddrehwinkel bevorzugt auf 1:N mit N kleiner 1 einstellbar ist. Es kann in einer besonders wendigen Ausführungsvariante vorgesehen sein, dass N größer 1 ist.

Auf diese Weise wird die Drehbewegung des vorderen Gabelschaftrohres nicht 1:1 auf eine Drehbewegung des hinteren Gabelschaftrohres umgesetzt. Bei N kleiner 1 führt eine Lenkbewegung dazu, dass ein Kurvenradius realisiert ist, der größer als bei einer 1:1 Umsetzung ist. Ist N größer 1, so ist der Kurvenradius bei einer Lenkbewegung kleiner als bei einer 1:1 Umsetzung der Drehwinkel.

Vorteilhafterweise führt dies dazu, dass die Wendigkeit des Zweirades insbesondere an der Kopplungsanordnung einstellbar ist. Dadurch kann der Fahrer die Wendigkeit des Zweirades individuell nach seinen Wünschen einstellen.

Eine besonders für Fahranfänger geeignete Ausführung der Erfindung sieht es vor, dass das hintere Gabelschaftrohr in seiner Drehbarkeit gegenüber dem hinteren Steuerrohr feststellbar ist, insbesondere wobei das Hinterrad in Geradeausfahrtrichtung eingestellt ist.

Dadurch, dass das Hinterrad in Geradeausfahrtrichtung eingestellt ist, sind der Kurvenradius und die Schräglage des Zweirades bei Kurvenfahrt eingeschränkt.

Dies bietet insbesondere für Fahranfänger den Vorteil, dass diese sich Schritt für Schritt an die speziellen Fahreigenschaften des erfindungsgemäßen Zweirades gewöhnen können.

Eine weitere Ausführungsform der Erfindung ist dadurch gekennzeichnet, dass die Kopplungsvorrichtung von zumindest einem der Gabelschaftrohre trennbar ist.

Auf diese Weise wird die Kopplung des Drehwinkels zwischen vorderem Gabelschaftrohr und hinterem Gabelschaftrohr unterbrochen, so dass die Lenkbewegung des vorderen Gabelschaftrohres nicht in eine Drehbewegung des hinteren Gabelschaftrohres überführt ist.

Eine derartige Ausführung der Erfindung hat den Vorteil, dass insbesondere das hintere Gabelschaftrohr entkoppelt ist und der Fahrtrichtung des Vorderrades nachläuft. Die Drehung des hinteren Gabelschaftrohres kann in diesem Fall dadurch vom Fahrer beeinflusst werden, dass dieser die Neigung des hinteren Rahmenabschnittes durch eine Schwerpunktverlagerung variiert. Zudem ist eine Trennung der Kopplungsvorrichtung notwendig, wenn das hintere Gabelschaftrohr in seiner Drehbarkeit gegenüber dem hinteren Steuerrohr festgestellt ist, um Fixierung des vorderen Gabelschaftrohres zu vermeiden und damit eine Lenkbarkeit des Zweirades sicherzustellen.

Vorteilhafterweise kann somit der Spielraum der Lenkung des Zweirades neben der Lenkbewegung auch durch eine Schwerpunktverlagerung des Fahrers beeinflusst werden. Außerdem wird bei einer Fixierung des hinteren Gabelschaftrohrs gegenüber dem hinteren Steuerrohr eine Lenkbarkeit des Zweirades ermöglicht.

In einer weiteren Ausführungsvariante der Erfindung ist vorgesehen, dass die Kopplungsanordnung eine Dämpfungsvorrichtung aufweist, die die Überführung der Drehbewegung vom vorderen zur hinteren Gabelschaftrohr dämpft.

Auf diese Weise wird die Lenkbewegung des vorderen Gabelschaftrohres verzögert auf eine Drehbewegung des hinteren Gabelschaftrohres umgesetzt, so dass sowohl Kurvenradius als auch Schräglage des Zweirades bei Kurvenfahrt reduziert sind. Eine variable Dämpfung der Überführung der Drehbewegung ermöglicht es dem Fahrer vorteilhafter Weise die Wendigkeit des erfindungsgemäßen Zweirades individuell einzustellen.

Eine weitere Ausführung der Erfindung sieht es vor, dass die Kopplungsanordnung zwischen dem vorderen Gabelschaftrohr und dem hinteren Gabelschaftrohr durch ein Zahnradgetriebe, ein Riemengetriebe oder ein Koppelgetriebe realisiert ist. Durch die Realisierung der Koppelanordnung mittels eines Zahnradgetriebes, eines Riemengetriebes oder eines Koppelgetriebes wird eine mechanische Kopplung zwischen dem vorderen Gabelschaftrohr und dem hinteren Gabelschaftrohr erreicht. Die mechanische Kopplung hat dabei den Vorteil, dass diese einfach zu realisieren ist und bei Beanspruchung eine hohe Robustheit aufweist.

Eine bevorzugte Ausführungsvariante der Erfindung ist dadurch gekennzeichnet, dass die Kopplungsanordnung ein Koppelgetriebe ist, das eine Koppelstange mit insbesondere variabler Länge aufweist, deren beide Enden auf unterschiedlichen Seiten des Rahmens gelenkig und in einem Abstand mit dem jeweiligen Gabelschaftrohr verbunden sind. Die Gelenke mit denen die Koppelstange gelenkig verbunden sind, sind bevorzugt auf Hebelarmen angeordnet, insbesondere wobei die Koppelstange bei Geradeausfahrt möglichst im rechten Winkel zu den beiden Hebelarmen, die am Gabelschaftrohr angeordnet sind, orientiert ist.

Dadurch, dass die beiden Enden der Koppelstange auf unterschiedlichen Seiten des Rahmens gelenkig und mit einem Abstand dem jeweiligen Gabelschaftrohr verbunden sind, wird bei einer Drehung des vorderen Gabelschaftrohres eine gegensinnige Drehung des hinteren Gabelschaftrohres verursacht. Die Koppelstange ist bei Geradeausfahrt möglichst im rechten Winkel zu den beiden Hebelarmen angeordnet, um bei einer Lenkbewegung des vorderen Gabelschaftrohres in beide Richtungen einen vom Betrag her identischen Lenkwinkel am hinteren Gabelschaftrohr zu erzielen. Die einstellbare Länge der Koppelstange ermöglicht insbesondere eine variable Einstellung des Koppelgetriebes.

Eine derartige Ausführungsform der Kopplungsanordnung hat den Vorteil, dass die Lenkbewegung des vorderen Gabelschaftrohres in eine gegensinnige Drehung des hinteren Gabelschaftrohres mit identischem Winkel überführt wird, so dass eine hohe Wendigkeit des Zweirades gegeben ist. Zudem bietet die Verwendung eines Koppelgetriebes als Kopplungsanordnung den Vorteil, dass die Kopplungsanordnung auf besonders einfache Weise zu realisieren ist und zudem eine robuste und platzsparende Kopplung zwischen vorderem und hinterem Gabelschaftrohr ermöglicht.

Eine weitere Variante der Erfindung ist dadurch gekennzeichnet, dass die Kopplungsanordnung zwei Gelenke aufweist, die gegenüber der jeweiligen Lenkachse einen unterschiedlichen Abstand aufweisen, oder zumindest ein solcher einstellbar ist.

Durch den unterschiedlichen Abstand zur jeweiligen Lenkachse wird bei dem Koppelgetriebe die Einstellung eines Übersetzungsverhältnisses der Lenkbewegung zwischen vorderem und hinterem Gabelschaftrohr realisiert. Das erfindungsgemäße Koppelgetriebe ermöglicht dadurch, dass eine Lenkbewegung des vorderen Gabelschaftrohres nicht 1:1 auf eine Lenkbewegung des hinteren Gabelschaftrohres umgesetzt wird.

Dies hat den Vorteil, dass das Verhältnis von Vorderraddrehwinkel zu Hinterraddrehwinkel einstellbar und damit die Wendigkeit des Zweirades einstellbar ist.

Eine bevorzugte Ausführungsform der Erfindung sieht vor, dass bei zumindest einem der Gelenke der Abstand zur Lenkachse änderbar ist. Ein variabler Abstand zur Lenkachse lässt sich bevorzugt durch Befestigung zumindest eines Gelenkes in einem Langloch eines am jeweiligen Gabelschaftrohr befestigten Hebelarms realisieren. Es können auch mehrere diskrete unterschiedlich zu Lenkachse beabstandete Befestigungsbohrungen statt eine durchgehenden Langloches vorgesehen sein. Es kann auch wenigstens einer der Hebelarme, an dem das jeweilige Gelenk befestigt ist, längenänderbar sein.

Auf diese Weise ist das Übersetzungsverhältnis zwischen Vorderraddrehachse und Hinterraddrehachse variabel einstellbar. Die Verwendung eines Langlochs in Kombination mit einer Koppelstange, deren Länge einstellbar ist, ermöglicht vorteilhafterweise eine einfache und robuste Ausführung einer Koppelanordnung mit variablem Übersetzungsverhältnis.

In einer weiteren Ausführungsvariante der Erfindung ist die Kopplungsanordnung durch einen Stellmotor gebildet, der insbesondere am hinteren Gabelschaftrohr angeordnet ist und die Drehbewegung des vorderen Gabelschaftrohres in eine Drehbewegung des hinteren Gabelschaftrohres überführt. Anstatt eines elektrischen Stellmotors ist es in einer weiteren Ausführung vorgesehen eine hydraulische, pneumatische oder magnetische Kupplung zwischen dem vorderen und dem hinteren Gabelschaftrohr zu verwenden.

Durch die Verwendung eines Stellmotors ist das Übersetzungsverhältnis zwischen der Drehbewegung des vorderen Gabelschaftrohres und des hinteren Gabelschaftrohres variabel elektronisch einstellbar. Ein Stellmotor bietet somit den Vorteil, dass der Fahrer des Zweirades die Wendigkeit auf einfache Weise variabel einstellen kann. Zudem bietet die Verwendung eines elektronisch einstellbaren Stellmotors die Möglichkeit die Übersetzung in Abhängigkeit der Geschwindigkeit des Zweirades zu steuern, so dass die Sicherheit beim Fahren erhöht werden kann.

Eine weitere Ausführungsvariante der Erfindung ist dadurch gekennzeichnet, dass der Durchmesser des Vorderrades größer oder gleich dem Durchmesser des Hinterrades ist. Bevorzugt weist das Vorderrad einen Durchmesser im Bereich von 20 cm bis 50 cm und das Hinterrad einen Durchmesser von 10 cm bis 40 cm auf. Das größere Vorderrad beeinflusst die Fahreigenschaften des Zweirades positiv. Insbesondere ermöglicht ein größeres Vorderrad eine bessere Überfahrung von Hindernissen und eine stabilere Fahrt auf unebenem Untergrund.

Eine weitere bevorzugte Ausführung der Erfindung sieht vor, dass das Vorderrad eine elektrische Antriebseinheit aufweist, die besonders bevorzugt als Radnabenmotor ausgeführt ist. Der Radnabenmotor weist vorzugsweise eine Leistung von 150 Watt bis 1500 Watt auf. Die Leistung wird bevorzugt automatisch oder vom Fahrer an die Steigung der Fahrbahn angepasst, wobei die Leistung beispielsweise beim Hochfahren eines Berges erhöht wird.

Dadurch, dass das Vorderrad elektrisch angetrieben wird, wird der Rahmen sowie das Hinterrad vom Vorderrad gezogen und führt damit vorteilhafterweise zu einer Steigerung des Untersteuerbudgets bei Kurvenfahrt Die Verwendung eines Radnabenmotors hat den Vorteil auf einfache und kompakte Weise einen elektrischen Antrieb des Vorderrades zu realisieren, wobei mit einer Leistung im Bereich von 150 Watt bis 1500 Watt einen optimale Beschleunigung und Endgeschwindigkeit des Zweirades erzielt wird.

Bei einer weiteren Ausführungsvariante der Erfindung ist vorgesehen, dass der Rahmen ein Akkumulator und eine Steuerungseinheit für die elektrische Antriebseinheit des Vorderrades aufweist. Bevorzugt sind Akkumulator und Steuerungseinheit in den Rahmen integriert und schnell austauschbar angeordnet.

Auf diese Weise lässt sich eine kompakte Bauweise des Zweirades realisieren, bei der Komponenten mit einem hohen Gewicht in unmittelbarer Nähe zum Rahmen angeordnet sind, so dass sich der Schwerpunkt des Zweirades im Zentrum befindet.

Vorteilhafterweise wird dadurch eine kompakte Bauweise ermöglicht, die für den Fahrer ausreichend Platz zur Verfügung stellt und zudem die Fahreigenschaften positiv beeinflusst.

Eine weitere Variante der Erfindung sieht vor, dass am Lenker eine Bedienungsvorrichtung für die elektrische Antriebseinheit angeordnet ist.

Die elektrische Antriebseinheit am Lenker ermöglicht dem Fahrer des Zweirades eine Bedienung der elektrischen Antriebseinheit ohne den Lenker loslassen zu müssen. Ein Vorteil dieser Ausführung ist deshalb, dass die elektrische Antriebseinheit auch bei Kurvenfahrt vom Fahrer sicher bedienbar und die Geschwindigkeit bzw. Beschleunigung entsprechend einstellbar sind. In einer bevorzugten Variante der Erfindung kann die Bedienvorrichtung verwendet werden, um eine gewünschte Distanz vorzugeben. Eine Rechnereinheit innerhalb der Bedienvorrichtung kann in diesem Fall die Leistung beispielsweise anhand eines Kennfeldes derart begrenzen, dass die Distanz erzielbar ist. Weiterhin ist beispielsweise vorgesehen, dass über die Bedienvorrichtung oder über ein mobiles Endgerät Geschwindigkeitswerte, Beschleunigungswerte und/oder Geschwindigkeitsprofile einstellbar sind.

Eine besonders bevorzugte Ausführung der Erfindung ist dadurch gekennzeichnet, dass der Rahmen ein Trittbrett aufweist, wobei das Trittbrett bevorzugt aus zwei relativ zur Geradeausfahrtrichtung parallel nebeneinander liegenden Trittflächen gebildet ist. Die Trittflächen sind insbesondere erfindungsgemäß so ausgerichtet, dass die Füße eines Nutzers auf beiden Rahmenseiten parallel abstellbar sind.

Auf diese Weise wird dem Fahrer des Zweirades eine Trittfläche zur Verfügung gestellt, auf die er sich während der Fahrt auf dem Zweirad stellen kann. Die relativ zur Geradeausfahrtrichtung parallel nebeneinander liegenden Trittflächen sorgen dafür, dass der Fahrer mit seinem Oberkörper senkrecht zur Fahrtrichtung ausgerichtet ist und damit in Fahrtrichtung schaut. Zudem ermöglichen die nebeneinander liegenden Trittflächen eine seitliche Belastung des Trittbretts und damit eine Lenkwirkung durch eine Schwerpunktverlagerung des Fahrers.

Vorteilhafterweise wird somit auf einfache Weise eine Stellfläche für den Fahrer geschaffen, die es ihm zudem ermöglicht, die Lenkeigenschaften des Zweirades durch Schwerpunktverlagerung zu steuern.

In einer Ausführungsvariante ist vorgesehen, dass das Trittbrett einklappbar ist und insbesondere im eingeklappten Zustand zumindest teilweise senkrecht zur Querachse des Rahmens orientiert ist. Dadurch, dass das Trittbrett einklappbar ist, kann die Grundfläche des Zweirades in der von der Längsachse und der Querachse des Rahmens aufgespannten Ebene reduziert werden. Dadurch lässt sich das erfindungsgemäße Zweirad leichter transportieren und/oder verstauen.

Eine weitere Ausführungsvariante sieht vor, dass das Trittbrett eine Trittbrettebene aufweist, die unter der Vorderradnabe und über der Hinterradnabe angeordnet ist. Besonders bevorzugt ist dabei, dass das Hinterrad zumindest teilweise zwischen den Trittflächen liegt, wobei das Trittbrett eine hintere Ausnehmung im Schwenkbereich des Hinterrades aufweist.

Dadurch, dass die Trittbrettebene unterhalb der Vorderradnabe liegt, wird der Schwerpunkt des Zweirades mit Fahrer vergleichsweise tief nach unten verlagert. Die zumindest teilweise Anordnung des Hinterrades zwischen den Trittbrettflächen ermöglicht es dem Fahrer im hinteren Bereich des Rahmens Stand zu finden und den Schwerpunkt dadurch nach hinten zu verlagern. Durch die hintere Ausnehmung im Schwenkbereich des Hinterrades kann das Hinterrad bei Kurvenfahrt eine Schwenkbewegung vollziehen, ohne dass das Trittbrett im Weg ist.

Eine derartige Ausgestaltung des Trittbretts hat den Vorteil, dass die Fahreigenschaften des Zweirades durch einen nach unten verlagerten Schwerpunkt verbessert sind. Zudem ermöglicht die Anordnung des Hinterrades zwischen den Trittbrettflächen einen Einfluss des Fahrers auf die Fahrbewegung des Fahrzeugs und erhöht somit die Wendigkeit bei einer Kurvenfahrt.

In einer Ausführung der Erfindung ist vorgesehen, dass das Trittbrett an zumindest einem Drehpunkt in Geradeausfahrtrichtung drehbar gelagert ist. Dadurch wird die Bewegung des Fahrers von der Bewegung des Zweirades entkoppelt, was dazu führt, dass sich das Trittbrett beim Bremsvorgang orthogonal zum Bremsvektor stellt, so dass der Schwerpunkt aus Fahrer und Zweirad weiter nach hinten verlagert wird. Dies hat den Vorteil, dass das Vorderrad beim Bremsvorgang entlastet wird und so die Stabilität des Zweirades bei Bremsvorgang erhöht ist.

In einer bevorzugten Ausführung der Erfindung weist der Rahmen einen Sattel und Fußauflagen auf. Auf diese Weise wird dem Fahrer des Zweirades eine Möglichkeit gegeben sich während der Fahrt hinzusetzen und somit auszuruhen.

In einer bevorzugten Ausgestaltung der Erfindung weist der Achsabstand zwischen Vorderrad und Hinterrad in Längsrichtung 500mm bis 800mm, bevorzugt 600mm bis 700mm auf. Insbesondere entspricht der Radstand zwischen Vorderrad und Hinterrad der Höhe des Schnittpunktes von vorderer und hinterer Lenkachse.

Ein derart kurzer Radstand führt dazu, dass die Wendigkeit im Vergleich zu herkömmlichen Zweirädern insbesondere in Kombination mit den aufeinander zugeneigten Lenkachsen und den gekoppelten Gabelschaftrohren eine verbesserte Agilität aufweist.

Nachfolgend wird die Erfindung anhand eines Ausführungsbeispiels unter Zuhilfenahme der Figuren näher erläutert: Es zeigen:
- Fig. 1:: eine Seitenansicht des Zweirades und
- Fig. 2:: eine Draufsicht des Zweirades mit Lenkeinschlag nach rechts bezüglich der Gradeausfahrtrichtung.

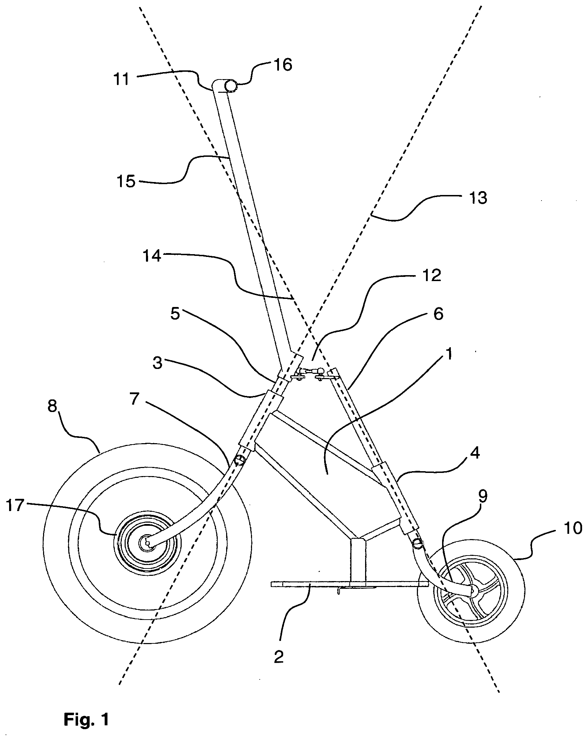

In Fig. 1 ist die Seitenansicht eines Ausführungsbeispiels der Erfindung gezeigt, wobei ein Rahmen 1 ein vorderes Steuerrohr 3 und ein hinteres Steuerrohr 4 aufweist. An dem vorderen Steuerrohr 3 ist ein vorderes Gabelschaftrohr 5 mit einer ein Vorderrad 8 aufnehmenden Vorderradgabel 7 und einer Lenkstange 15, an der ein Lenker 16 angeordnet ist, drehbar gelagert. Zudem definiert das vordere Steuerrohr 3 eine vordere Lenkachse 13. Das hintere Steuerrohr 4, an dem ein hinteres Gabelschaftrohr 6 mit einer ein Hinterrad 10 aufnehmenden Hinterradgabel 9 drehbar gelagert ist, definiert eine hintere Lenkachse 14. Die jeweilige Lenkachse ist bevorzugt die Mittelache des jeweiligen Steuerrohres.

Das vordere Gabelschaftrohr 5 ist mit dem hinteren Gabelschaftrohr 6 über eine Kopplungsanordnung 12 verbunden, wobei das hintere Gabelschaftrohr 6 in Abhängigkeit des Drehwinkels des vorderen Gabelschaftrohres 5 drehbar ist. Die vordere Lenkachse 13 und die hintere Lenkachse 14 sind aufeinander zugeneigt und schneiden sich unterhalb des Lenkers 16. Bezüglich einer Geradeausfahrtrichtung ist die vordere Lenkachse 13 nach hinten geneigt, während die hintere Lenkachse 14 nach vorne geneigt ist. Der Neigungswinkel ist dabei so gewählt, dass sich beide Lenkachsen unterhalb des Lenkers 16 schneiden. Der Schnittpunkt liegt dabei bevorzugter Weise unterhalb der Schritthöhe eines Durchschnittsmenschen.. In der dargestellten Ausführung der Erfindung ist es vorgesehen, dass die Höhe des Schnittpunktes dem 0,7 bis 1,3-fachem Radstand zwischen Vorderrad (8) und Hinterrad (10) entspricht.

Eine derart ausgeprägte Neigung der vorderen Lenkachse 13 führt dazu, dass das Vorderrad 8 bei einer Drehung des vorderen Gabelschaftrohres 5 in Längsrichtung des Rahmens 1 und gegenüber einer Vertikalen gekippt wird. Bei Kurvenfahrt führt dies zu einem Radsturz, der höhere Seitenkräfte generiert, so dass ein Durchfahren von Kurven mit einer höheren Geschwindigkeit möglich ist. Die ausgeprägte Neigung der hinteren Lenkachse 14 nach vorne führt dazu, dass das Hinterrad 10 bei Kurvenfahrt ebenfalls bezüglich einer Vertikalen gekippt ist. Der auf diese Weise erzeugte Radsturz generiert höhere Seitenkräfte am Hinterrad.

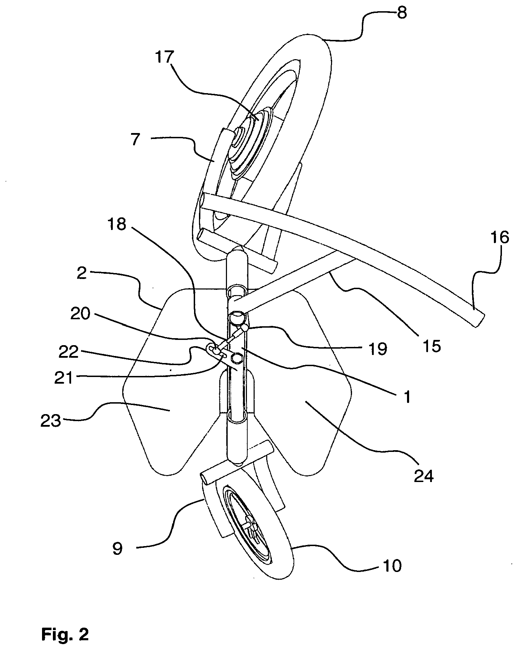

In der Draufsicht aus Fig. 2 ist das Zweirad bei Lenkeinschlag des Lenkers 16 nach rechts bezüglich der Längsachse des Rahmens 1 dargestellt. Eine Lenkbewegung des Lenkers 16 führt zu einer Drehung des vorderen Gabelschaftrohres 5 und zu einer Verkippung des Vorderrades 8 gegenüber der Längsachse des Rahmens 1 sowie zu einer Verkippung gegenüber einer Vertikalen, die in dieser Darstellung senkrecht zum Blatt orientiert ist. Die Kopplung der Drehbewegung des vorderen Gabelschaftrohres 5 mit dem hinteren Gabelschaftrohr 6 führt dazu, dass auch Hinterrad 10 bezüglich der Längsachse des Rahmens 1 und einer Vertikalen verkippt ist. Bei einer Kurvenfahrt sind die Radmittelebenen von Vorderrad 8 und Hinterrad 10 zum Zentrum des Kurvenbogens gekippt, so dass eine Kurve aufgrund der höheren Seitenkraft mit einer höheren Geschwindigkeit durchfahrbar ist.

Wie in Fig. 1 dargestellt sind die vordere Lenkachse 13 und die hintere Lenkachse 14 mit identischem Neigungswinkelbetrag zur Vertikalen geneigt. Bevorzugt ist dabei ein Neigungswinkel im Bereich von 15° bis 35°, wobei sich herausgestellt hat, dass ein Neigungswinkel im Bereich von 20° bis 30° besonders bevorzugt ist.

Die Lenkstange 15, die am vorderen Gabelschaftrohr 5 angeordnet ist, ist in Richtung des Vorderrades 8 abgewinkelt. Auf diese Weise entsteht oberhalb des Rahmens 1 ein Freiraum, der vom Oberkörper des Fahrers einnehmbar ist. In einer besonders ergonomischen Ausführungsform ist die radiale Entfernung des oberen Endes der Lenkstange 11 zur vorderen Lenkachse 13 größer als das Ellenbogenmaß eines Durchschnittsmenschen. Dadurch wird dem Fahrer ermöglicht das Zweirad bequem zu lenken.

Wie in Fig. 1 dargestellt, befindet sich das obere Ende der Lenkstange 11 in der Nähe der hinteren Lenkachse 14. Durch eine derartige Anordnung der Lenkstange 15 wird sichergestellt, dass sich die Lenkstange 15 bei einer Lenkbewegung um den Fahrer in Lenkrichtung dreht (siehe Fig. 2). Dies führt dazu, dass der Fahrer die Schräglage des Zweirades unmittelbar mitgeht und sich bei Kurvenfahrt in die Kurve reinlegt, so dass damit eine Wendigkeit des Zweirades erhöht ist. Das obere Ende der Lenkstange 11 hat, wie in Fig. 1 dargestellt, eine Höhe, die vorzugsweise 1,6 bis 2,0-fach größer ist als der Radstand zwischen Vorderrad 8 und Hinterrad 10.

In einer nicht explizit dargestellten Ausführungsvariante befindet sich der Schnittpunkt einer nach unten verlängerten Mittelachse der Lenkstange 15 mit der Fahrbahn, respektive der Verbindungsgraden zwischen einem Fahrbahnkontaktpunkt des Vorderrades 8 einem Fahrbahnkontaktpunkt des Hinterrades 10, unterhalb dem Gesamtschwerpunkt des Zweirades. Eine weitere nicht dargestellte besonders fahrstabile Ausführungsvariante der Erfindung sieht es vor, dass das Verhältnis der Nachlaufstrecke des Vorderrades zur Nachlaufstrecke des Hinterrades gleich dem Verhältnis der Hinterradlast zur Vorderradlast ist. Dadurch werden Störmomente ausgeglichen, was vorteilhafterweise zu einem stabileren Fahrverhalten führt, insbesondere bei Geradeausfahrt.

Die Wendigkeit des Zweirades wird zudem dadurch erhöht, dass durch die Kopplungsanordnung 12 eine Drehbewegung des vorderen Gabelschaftrohres 5 in eine gegensinnige Drehbewegung des hinteren Gabelschaftrohres 6 überführt ist. Für eine erhöhte Wendigkeit vollführen die Gabelschaftrohre 5 und 6 eine gegensinnige Drehbewegung mit demselben Winkelbetrag. In diesem Fall führt ein Lenkeinschlag des vorderen Gabelschaftrohres 5 zu einem gleichen Lenkeinschlag des hinteren Gabelschaftrohres 6 und damit zu einem deutlich reduzierten Kurvenradius des Zweirades.

In einer nicht dargestellten Variante der Erfindung ist das hintere Gabelschaftrohr 6 in seiner Drehbarkeit gegenüber dem hinteren Steuerrohr 4 festgestellt, wobei das Hinterrad 10 insbesondere in Geradeausfahrtrichtung arretiert ist. Eine Arretierung des hinteren Gabelschaftrohres 6 hat dabei den Vorteil, dass die Wendigkeit des Zweirades eingeschränkt ist, so dass insbesondere Fahranfänger sich mit dem Fahrverhalten des Zweirades vertraut machen können.

Bei einem arretierten hinteren Gabelschaftrohr ist es vorteilhaft die Kopplungsvorrichtung 12 zumindest von einem der Gabelschaftrohre 5 oder 6 zu trennen, um eine Drehbarkeit des vorderen Gabelschaftrohres 5 aufrecht zu erhalten. Eine Trennung der Kopplungsvorrichtung 12 kann zudem verwendet werden, um das hintere Gabelschaftrohr 6 durch Schwerpunktverlagerung des Fahrers zu steuern, wobei das hintere Gabelschaftrohr in diesem Fall nicht an den Rahmen 1 arretiert ist.

In einer nicht dargestellten Ausführungsform weist die Kopplungsanordnung 12 eine Dämpfungsvorrichtung auf, die die Überführung der Drehbewegung zwischen dem hinteren Gabelschaftrohr 6 und dem vorderen Gabelschaftrohr 5 dämpft. Eine variable Einstellung der Dämpfung ermöglicht eine variable Einstellung der Wendigkeit des Zweirades nach den individuellen Bedürfnissen des Fahrers.

In Fig. 1 und Fig. 2 ist eine Kopplungsanordnung 12 dargestellt, die Koppelstange 18 umfasst, deren beiden Enden auf unterschiedlichen Seiten des Rahmens 1 gelenkig und in einem Abstand mit dem jeweiligen Gabelschaftrohr 6 oder 5 über einen jeweiligen Hebelarm verbunden sind. Die Koppelstange 18 ist dabei bevorzugt an zwei Gelenken 19 und 20 angeordnet, wobei diese Gelenke 19 und 20 in einer besonders robusten und einfach zu realisierenden Variante, durch Kugelgelenke gebildet sind.

Bei zumindest einem der Gelenke 19 und 20 ist der Abstand zur Längsachse des Rahmens 1 änderbar, insbesondere wobei die Änderung des Abstandes durch Befestigung eines Gelenkes 20 in einem Langloch 21 realisiert ist, das in einen Hebelarm 22 integriert ist.

In einer nicht dargestellten Ausführungsvariante der Erfindung wird die Kopplungsanordnung durch einen Stellmotor gebildet, der insbesondere am zweiten Gabelschaftrohr 6 angeordnet ist. Der Stellmotor überführt die Drehbewegung des ersten Gabelschaftrohres 5 in eine Drehbewegung des zweiten Gabelschaftrohres 6. Die Verwendung eines Stellmotors bietet dabei den Vorteil, dass die Übersetzung elektronisch variabel einstellbar ist und damit die Wendigkeit auf einfache Weise vom Fahrer festzulegen ist. Zudem lässt sich die Wendigkeit in dieser Ausführungsform der Erfindung in Abhängigkeit der Geschwindigkeit des Zweirades steuern, so dass beispielsweise die Sicherheit erhöht ist.

Wie in Fig. 1 dargestellt, weist eine Ausführung der Erfindung ein Vorderrad 8 auf, das größer ist als das Hinterrad 10. Das Vorderrad 8 weist zudem eine elektrische Antriebseinheit 17 auf, die bevorzugt als Radnabenmotor ausgeführt ist. Durch die Verwendung eines größeren Vorderrads 8 in Kombination mit einem Vorderradantrieb 17 werden die Fahreigenschaften des Zweirades positiv beeinflusst. Beispielsweise ermöglicht das größere Vorderrad 8 das Überfahren von Hindernissen. Zudem wird durch das Ziehen des Zweirades durch das Vorderrad 8 die Stabilität bei Kurvenfahrt verbessert, da der Rahmen 1 und das Hinterrad 10 von dem Vorderrad 8 gezogen werden.

In einer nicht dargestellten Ausführungsvariante der Erfindung weist der Rahmen 1 einen Akkumulator und eine Steuerungseinheit für die elektrische Antriebseinheit 17 auf. Durch die Anordnung eines Akkumulators bei einer Steuerungseinheit am oder im Rahmen 1 des Zweirades wird eine besonders kompakte Bauweise des Zweirades realisiert, bei der der Schwerpunkt in der Nähe des Rahmen 1 liegt, so dass die Wendigkeit des Zweirades erhöht ist.

Eine weitere nicht dargestellte Ausführungsvariante der Erfindung sieht vor, dass am Lenker 16 eine Bedienungsvorrichtung für die elektrische Antriebseinheit angeordnet ist. Durch die Anordnung der Bedienungsvorrichtung am Lenker 16 kann der Fahrer die Geschwindigkeit bzw. die Leistung des Zweirades unmittelbar steuern und während einer Kurvenfahrt stufenlos variieren.

Wie in der Draufsicht der Fig. 2 dargestellt, weist der Rahmen 1 ein Trittbrett 2 auf, dass aus zwei relativ zur Geradeausfahrtrichtung parallel nebeneinander liegenden Trittflächen 23 und 24 gebildet ist. Die Trittflächen 23 und 24 sind insbesondere so ausgebildet, dass die Füße eines Fahrers auf beiden Rahmenseiten parallel nebeneinander stellbar sind. Eine derartige Gestaltung der Trittflächen 23 und 24 ermöglicht dem Fahrer einen sicheren Stand, wobei der Oberkörper des Fahrers senkrecht zur Geradeausfahrtrichtung orientiert ist.

In der durch Fig. 2 dargestellten Ausführungsvariante ist die Trittbrettebene des Trittbrettes 2 unter der Vorderradnabe und über der Hinterradnabe angeordnet, so dass der Schwerpunkt des Zweirades mit dem darauf stehendem Fahrer möglichst tief liegt. Auf diese Weise wird die Wendigkeit des Zweirades erhöht. Zudem liegt das Hinterrad 10, wie in Fig. 2 dargestellt, zumindest teilweise zwischen den Trittbrettflächen 23 und 24, insbesondere wobei das Trittbrett 2 eine hintere Ausnehmung im Schwenkbereich des Hinterrades 10 aufweist.

Eine nicht dargestellte Ausführung der Erfindung ist dadurch gekennzeichnet, dass das Trittbrett 2 einklappbar ist und insbesondere im eingeklappten Zustand zumindest teilweise senkrecht zur Querachse des Rahmens 1 orientiert ist. Auf diese Weise lässt sich die Grundfläche des Zweirades reduzieren, was den Transport und/oder die Verstauung des Zweirades erleichtert.

Eine nicht dargestellte Variante der Erfindung sieht vor, dass der Rahmen 1 einen Sattel und Fußauflagen aufweist, so dass sich der Fahrer während der Fahrt hinsetzen kann. Dadurch wird eine Ermüdung des Fahrers bei längeren Fahrten vermieden.

Das erfindungsgemäße Zweirad weist wie in Fig. 1 und Fig. 2 angedeutet einen sehr kurzen Achsabstand zwischen Vorderrad 8 und Hinterrad 10 auf, wobei ein Wert zwischen 500mm bis 800mm bevorzugt und zwischen 600mm und 700mm besonders bevorzugt ist.

Die starke Neigung der Lenkachsen 13 und 14 zueinander, die gegensinnige Kopplung der Gabelschaftrohre 5 und 6, die tiefe Position des Trittbrettes 2 und der kurze Abstand zwischen Vorderrad 8 und Hinterrad 10 ermöglichen die Realisierung eines kompakten Zweirades, das bei Kurvenfahrt besonders wendig ist.

### Bezugszeichen

- 1: Rahmen
- 2: Trittbrett
- 3: vorderes Steuerrohr
- 4: hinteres Steuerrohr
- 5: vorderes Gabelschaftrohr
- 6: hinteres Gabelschaftrohr
- 7: Vorderradgabel
- 8: Vorderrad
- 9: Hinterradgabel
- 10: Hinterrad
- 11: oberes Ende der Lenkstange
- 12: Kopplungsanordnung
- 13: vordere Lenkachse
- 14: hintere Lenkachse
- 15: Lenkstange
- 16: Lenker
- 17: Antriebseinheit
- 18: Koppelstange
- 19: erstes Gelenk
- 20: zweites Gelenk
- 21: Langloch
- 22: Hebelarm
- 23: linke Trittfläche
- 24: rechte Trittfläche

## Patentansprüche

1. Zweirad, mit einem Rahmen (1) umfassend
- ein vorderes Steuerrohr (3), das eine vordere Lenkachse (13) definiert und an dem ein vorderes Gabelschaftrohr (5) mit einer ein Vorderrad (8) aufnehmenden Vorderradgabel (7) und einer Lenkstange (15), an der ein Lenker (16) angeordnet ist, drehbar gelagert ist, und
- ein hinteres Steuerrohr (4), das eine hintere Lenkachse (14) definiert und an dem ein hinteres Gabelschaftrohr (6) mit einer ein Hinterrad (10) aufnehmenden Hinterradgabel (9) drehbar gelagert ist,
- wobei das hintere Gabelschaftrohr (6) mit dem vorderen Gabelschaftrohr (5) über eine Kopplungsanordnung (12) verbunden und in Abhängigkeit des Drehwinkels des vorderen Gabelschaftrohres (5) drehbar ist,
**dadurch gekennzeichnet, dass**
- die vordere Lenkachse (13) und die hintere Lenkachse (14) aufeinander zu geneigt sind und sich unterhalb des Lenkers (16) schneiden.

2. Zweirad nach Anspruch 1, **dadurch gekennzeichnet, dass** ein Schnittpunkt der vorderen Lenkachse (13) mit der hinteren Lenkachse (14) eine Höhe aufweist, die dem 0,7 bis 1,3-fachen des Radstandes zwischen Vorderrad (8) und Hinterrad (10) entspricht, insbesondere gleich dem Radstand ist.

3. Zweirad nach Anspruch 1 oder 2, **dadurch gekennzeichnet, dass** die vordere Lenkachse (13) und die hintere Lenkachse (14) mit identischem Neigungswinkelbetrag zur Vertikalen geneigt sind.

4. Zweirad nach einem der vorherigen Ansprüche, **dadurch gekennzeichnet, dass** die Lenkstange (15) abgewinkelt in Richtung des Vorderrades (8) am vorderen Gabelschaftrohr (5) angeordnet ist.

5. Zweirad nach einem der vorherigen Ansprüche, **dadurch gekennzeichnet, dass** die radiale Entfernung des oberen Endes der Lenkstange (11) zur hinteren Lenkachse (14) kleiner ist als zur vorderen Lenkachse (13).

6. Zweirad nach einem der vorherigen Ansprüche, **dadurch gekennzeichnet, dass** die radiale Entfernung des oberen Endes der Lenkstange (11) zur vorderen Lenkachse (13) größer als das Ellenbogenmaß eines Durchschnittsmenschen ist, bevorzugt größer als 50 cm.

7. Zweirad nach einem der vorherigen Ansprüche, **dadurch gekennzeichnet, dass** sich das obere Ende des Lenkstange (11) in der Nähe der hinteren Lenkachse (14) befindet, insbesondere wobei die radiale Entfernung zur hinteren Lenkachse (14) kleiner als 10 cm ist.

8. Zweirad nach einem der vorherigen Ansprüche, **dadurch gekennzeichnet, dass** das obere Ende der Lenkstange (11) eine Höhe aufweist, die 1,6-fach bis 2-fach größer ist als der Radstand zwischen Vorderrad (8) und Hinterrad (10).

9. Zweirad nach einem der vorherigen Ansprüche, **dadurch gekennzeichnet, dass** eine nach unten verlängerte Mittelachse der Lenkstange (15) eine Verbindungsgerade zwischen einem Fahrbahnkontaktpunkt des Vorderrades (8) und einem Fahrbahnkontaktpunkt des Hinterrades (10) in einem Punkt schneidet, der in Längsrichtung maximal einen Abstand von 15 cm zu der Höhenachse des Gesamtschwerpunktes des Zweirades aufweist.

10. Zweirad nach einem der vorherigen Ansprüche, **dadurch gekennzeichnet, dass** durch die Kopplungsanordnung (12) eine Drehbewegung des vorderen Gabelschaftrohres (5) in eine gegensinnige Drehbewegung des hinteren Gabelschaftrohres (6) überführt ist, insbesondere mit demselben Winkelbetrag.

11. Zweirad nach einem der vorherigen Ansprüche, **dadurch gekennzeichnet, dass** das Übersetzungsverhältnis zwischen den Drehwinkeln einstellbar ist, insbesondere an der Kopplungsanordnung (12), bevorzugt das Verhältnis von Vorderraddrehwinkel zu Hinterraddrehwinkel auf 1:N mit N kleiner gleich 1 einstellbar ist.

12. Zweirad nach einem der vorherigen Ansprüche, **dadurch gekennzeichnet, dass** das hintere Gabelschaftrohr (6) in seiner Drehbarkeit gegenüber dem hinteren Steuerrohr (4) feststellbar ist, insbesondere in einer Geradeausfahrtrichtung des Hinterrades.

13. Zweirad nach einem der vorherigen Ansprüche, **dadurch gekennzeichnet, dass** die Kopplungsvorrichtung (12) von zumindest einem der Gabelschaftrohre (3, 4) trennbar ist

14. Zweirad nach einem der vorherigen Ansprüche, **dadurch gekennzeichnet, dass** die Kopplungsanordnung (12) eine Dämpfungsvorrichtung aufweist, welche die Überführung der Drehbewegung dämpft.

15. Zweirad nach einem der vorherigen Ansprüche, **dadurch gekennzeichnet, dass** die Kopplungsanordnung (12) zwischen dem vorderen Gabelschaftrohr (5) und dem hinteren Gabelschaftrohr (6) ein Zahnradgetriebe, ein Riemengetriebe oder ein Koppelgetriebe ist, wobei das Koppelgetriebe eine Koppelstange (18), insbesondere in der Länge einstellbare Koppelstange (18), umfasst, deren beide Enden auf unterschiedlichen Seiten des Rahmens (1) gelenkig und in einem Abstand mit dem jeweiligen Gabelschaftrohr (5, 6) verbunden sind.

## Claims

1. Two-wheeler, having a frame (1) comprising
- a front head tube (3) which defines a front steering axis (13), and on which a front fork steerer tube (5), having a front wheel fork (7) that receives a front wheel (8) and steering rod (15) on which a handlebar (16) is disposed, is rotatably mounted; and
- a rear head tube (4) which defines a rear steering axis (14), and on which a rear fork steerer tube (6) having a rear wheel fork (9) that receives a rear wheel (10) is rotatably mounted;
- wherein the rear fork steerer tube (6) by way of a coupling assembly (12) is connected to the front fork steerer tube (5) and is rotatable as a function of the rotation angle of the front fork steerer tube (5),
**characterized in that**
- the front steering axis (13) and the rear steering axis (14) are inclined towards one another and intersect below the handlebar (16).

2. Two-wheeler according to Claim 1, **characterized in that** an intersection point of the front steering axis (13) and the rear steering axis (14) has a height which corresponds to 0.7 to 1.3 times the wheel base between the front wheel (8) and the rear wheel (10), in particular is equal to the wheel base.

3. Two-wheeler according to Claim 1 or 2, **characterized in that** the front steering axis (13) and the rear steering axis (14) in relation to the vertical are inclined at identical inclination angle values.

4. Two-wheeler according to one of the preceding claims, **characterized in that** the handlebar (15) is disposed on the front fork steerer tube (5) so as to be angled in the direction of the front wheel (8) .

5. Two-wheeler according to one of the preceding claims, **characterized in that** the radial distance of the upper end of the handlebar (11) from the rear steering axis (14) is smaller than that from the front steering axis (13).

6. Two-wheeler according to one of the preceding claims, **characterized in that** the radial distance of the upper end of the handlebar (11) from the front steering axis (13) is larger than the dimension of an elbow of an average person, preferably larger than 50 cm.

7. Two-wheeler according to one of the preceding claims, **characterized in that** the upper end of the handlebar (11) is situated close to the rear steering axis (14), in particular wherein the radial distance from the rear steering axis (14) is smaller than 10 cm.

8. Two-wheeler according to one of the preceding claims, **characterized in that** the upper end of the handlebar (11) has a height which is 1.6 times to 2 times larger than the wheel base between the front wheel (8) and the rear wheel (10).

9. Two-wheeler according to one of the preceding claims, **characterized in that** a downwardly extended central axis of the handlebar (15) intersects a connecting straight line between a contact point of the front wheel (8) with a carriageway and a contact point of the rear wheel (10) with a carriageway at a point which in the longitudinal direction has a spacing of at most 15 cm from the vertical axis of the overall centre of gravity of the two-wheeler.

10. Two-wheeler according to one of the preceding claims, **characterized in that**, on account of the coupling assembly (12), a rotating movement of the front fork steerer tube (5) is converted to a counter-rotating movement of the rear fork steerer tube (6), in particular with the same angular value.

11. Two-wheeler according to one of the preceding claims, **characterized in that** the gearing ratio between the rotating angles is adjustable, in particular at the coupling assembly (12), the ratio between the front wheel rotation angle and the rear wheel rotation angle preferably being adjustable to 1:N, where N is less than or equal to 1.

12. Two-wheeler according to one of the preceding claims, **characterized in that** the rear fork steerer tube (6) in terms of the rotatability thereof is fixable in relation to the rear head tube (4), in particular in a straight-ahead travel direction of the rear wheel.

13. Two-wheeler according to one of the preceding claims, **characterized in that** the coupling device (12) is capable of being separated from at least one of the fork steerer tubes (3, 4).

14. Two-wheeler according to one of the preceding claims, **characterized in that** the coupling assembly (12) has a damper device which damps the conversion of the rotating movement.

15. Two-wheeler according to one of the preceding claims, **characterized in that** the coupling assembly (12) between the front fork steerer tube (5) and the rear fork steerer tube (6) is a gear transmission, a belt transmission, or a coupler transmission, wherein the coupler transmission comprises a coupler bar (18), in particular a coupler bar (18) that is adjustable in terms of length, the two ends of said coupler bar (18) on different sides of the frame (1) being connected to the respective fork steerer tube (5, 6) in an articulated and spaced-apart manner.

## Revendications

1. Deux-roues, comprenant un cadre (1) qui comporte
- un tube de direction avant (3) qui définit un axe de direction avant (13) et au niveau duquel un tube de fourche avant (5) est monté à rotation qui est pourvu d'une fourche de roue avant (7) recevant une roue avant (8) et d'une barre de direction (15) au niveau de laquelle est disposé un guidon (16), et
- un tube de direction arrière (4) qui définit un axe de direction arrière (14) et au niveau duquel un tube de fourche arrière (6) est monté à rotation qui est pourvu d'une fourche de roue arrière (9) recevant une roue arrière (10),
- le tube de fourche arrière (6) étant relié au tube de fourche avant (5) par un ensemble d'accouplement (12) et pouvant tourner en fonction de l'angle de rotation du tube de fourche avant (5),
**caractérisé en ce que**
- l'axe de direction avant (13) et l'axe de direction arrière (14) sont inclinés l'un par rapport à l'autre et se croisent au-dessous du guidon (16).

2. Deux-roues selon la revendication 1, **caractérisé en ce que** l'intersection de l'axe de direction avant (13) avec l'axe de direction arrière (14) a une hauteur qui est de 0,7 à 1,3 fois l'empattement entre la roue avant (8) et la roue arrière (10), notamment est égale à l'empattement.

3. Deux-roues selon la revendication 1 ou 2, **caractérisé en ce que** l'axe de direction avant (13) et l'axe de direction arrière (14) sont inclinés du même angle d'inclinaison par rapport à la verticale.

4. Deux-roues selon l'une des revendications précédentes, **caractérisé en ce que** la barre de direction (15) est disposée de manière coudée en direction de la roue avant (8) au niveau du tube de fourche avant (5).

5. Deux-roues selon l'une des revendications précédentes, **caractérisé en ce que** la distance radiale de l'extrémité supérieure de la barre de direction (11) par rapport à l'axe de direction arrière (14) est inférieure à celle par rapport à l'axe de direction avant (13).

6. Deux-roues selon l'une des revendications précédentes, **caractérisé en ce que** la distance radiale de l'extrémité supérieure de la barre de direction (11) par rapport à l'axe de direction avant (13) est supérieure à la dimension du coude d'une personne moyenne, de préférence supérieure à 50 cm.

7. Deux-roues selon l'une des revendications précédentes, **caractérisé en ce que** l'extrémité supérieure de la barre de direction (11) est située au voisinage de l'axe de direction arrière (14), notamment la distance radiale par rapport à l'axe de direction arrière (14) étant inférieure à 10 cm.

8. Deux-roues selon l'une des revendications précédentes, **caractérisé en ce que** l'extrémité supérieure de la barre de direction (11) a une hauteur qui est 1,6 fois à 2 fois supérieure à l'empattement entre la roue avant (8) et la roue arrière (10).

9. Deux-roues selon l'une des revendications précédentes, **caractérisé en ce qu'**un axe central, prolongé vers le bas, de la barre de direction (15) coupe une droite de liaison, s'étendant entre un point de contact de la roue avant (8) avec la chaussée et un point de contact de la roue arrière (10) avec la chaussée, en un point qui est situé au maximum à une distance de 15 cm par rapport à l'axe de hauteur du centre de gravité du deux-roues dans la direction longitudinale.

10. Deux-roues selon l'une des revendications précédentes, **caractérisé en ce qu'**un mouvement de rotation du tube de fourche avant (5) est transformé en un mouvement de rotation de sens opposé du tube de fourche arrière (6), en particulier du même angle en valeur absolue, par l'ensemble d'accouplement (12).

11. Deux-roues selon l'une des revendications précédentes, **caractérisé en ce que** le rapport de transmission entre les angles de rotation est réglable, notamment au niveau de l'ensemble d'accouplement (12), de préférence le rapport de l'angle de rotation de la roue avant à l'angle de rotation de la roue arrière est réglable à 1:N avec N inférieur ou égal à 1.

12. Deux-roues selon l'une des revendications précédentes, **caractérisé en ce que** la capacité de rotation du tube de fourche arrière (6) par rapport à celle du tube de fourche arrière (4) peut être spécifiée, notamment dans une direction de roulement rectiligne de la roue arrière.

13. Deux-roues selon l'une des revendications précédentes, **caractérisé en ce que** l'ensemble d'accouplement (12) peut être séparé de l'un au moins des tubes de fourche (3, 4).

14. Deux-roues selon l'une des revendications précédentes, **caractérisé en ce que** l'ensemble d'accouplement (12) comporte un dispositif d'amortissement qui amortit le transfert du mouvement de rotation.

15. Deux-roues selon l'une des revendications précédentes, **caractérisé en ce que** l'ensemble d'accouplement (12) entre le tube de fourche avant (5) et le tube de fourche arrière (6) est une transmission par engrenages, une transmission par courroie ou une transmission par engrenage accouplé, la transmission par engrenage accouplé comprenant une barre d'accouplement (18), en particulier une barre d'accouplement (18) réglable en longueur dont les deux extrémités sont reliées au tube de fourche respectif (5, 6) de manière articulée sur différents côtés du cadre (1) et à distance.
